# EUROPÄISCHE PATENTSCHRIFT

(11) **EP 0 414 939 B1**
(45) Veröffentlichungstag und Bekanntmachung des Hinweises auf die Patenterteilung: **26.05.1993**
(21) Anmeldenummer: 89116025.1
(22) Anmeldetag: 30.08.1989
(51) Int. Cl.: G05D 13/62, B65G 43/00

(54) **Schwingungsfreie Anfahr-und Bremsregelung für Förderanlagen**
Vibrationless starting and braking control for transporting equipment
Régulateur pour le démarrage et le freinage sans vibrations pour un ensemble transporteur

(43) Veröffentlichungstag der Anmeldung: 06.03.1991
(73) Patentinhaber: SIEMENS AKTIENGESELLSCHAFT, 80333 München (DE)
(72) Erfinder: Koopmann, Klaus, Dipl.-Ing., D-8520 Erlangen (DE)

(56) Entgegenhaltungen:
- GB-A- 2 161 777
- ELEKTRONIK, Bd. 34, Nr. 2, Januar 1985, München,DE,Seiten 53 - 57; P.F. ORLOWSKI: "Fahrkurvenrechner für die Antriebstechnik"

## Beschreibung

Die Erfindung betrifft eine schwingungsfreie Regelung eines Antriebssystems, insbesondere für den Anfahr- und Bremsvorgang von massenschwingungsbehafteten Förderanlagen, z.B. Großbandanlagen oder Seilförderanlagen, die eine Anfahr- und Bremsmomentregelung mit einer Hochlauf- und Bremsverlaufsvorgabe aufweist gemäß dem Oberbegriff des Anspruchs 1.

Für das Anfahren oder Bremsen von massenschwingungsbehafteten Förderanlagen, z.B. Großbandanlagen, ist es bekannt, diese über eine Geschwindigkeitsrampe anzufahren oder abzubremsen, wobei ein Begrenzer für die Beschleunigungsänderung vorgesehen ist, der in Funktion tritt, wenn das Band anfährt. Die Beschleunigungsänderung ist dabei eine Funktion der Zeit. Durch den Beschleunigungsbegrenzer wird beim Anfahren ein linearer Anstieg der Beschleunigung erreicht, ebenso ein linearer Abfall beim Stillsetzen. Diese bekannte Regelung arbeitet bereits in vielen Fällen zufriedenstellend und reduziert die Anfahrschwingungen einer Großförderanlage auf kleine Größen. Auch für das Beschleunigen und Stillsetzen von Förderkörben etc. ist sie gut geeignet. Nähere Einzelheiten sind aus dem Prospekt der Siemens AG "Advanced drive system" 127351 PA 5872.5 zu ersehen.

Es ist Aufgabe der Erfindung, die bekannte Regelung für den Betrieb, insbesondere für das Anfahren und Stillsetzen von massenschwingungsbehafteten Förderanlagen noch weiter zu vervollkommnen, um einen sicheren, schwingungsfreien und schonenden Betrieb zu erreichen.

Die Aufgabe wird entsprechend den Maßnahmen des Anspruchs 1 gelöst.

In Ausgestaltung der Erfindung ist vorgesehen, daß die Periodendauer der kleinsten Eigenfrequenz der Anfahr- oder Bremsmassenschwingung als Führungsgröße für den Aufbau des Lastmomenten-Sollwerts und der Beschleunigungsmomente verwendet wird, wobei die Periodendauer durch Betriebsmessungen oder durch eine Modellrechnung ermittelt werden kann. So ist erfindungsgemäß eine an die jeweiligen konstruktiven Verhältnisse und Lastbedingungen der angetriebenen Förderanlage angepaßte und abgestimmte, im Rahmen des wirtschaftlich Sinnvollen, optimale Regelung möglich.

Die notwendigen Eigenfrequenzmessungen werden in bekannter Weise mit elektrischen oder optischen Meßgeräten durchgeführt. Eine Modellrechnung ist aus der älteren Patentanmeldung EP-A- 0340595 bekannt.

In weiterer Ausgestaltung der Erfindung ist vorgesehen, daß der Lastmomenten-Sollwert dem Ausgangssignal der Geschwindigkeitsregelung so nachgeführt wird, daß das Ausgangssignal des Geschwindigkeitsreglers nahezu auf Null abgeglichen ist. Hierdurch wird das Verhalten der erfindungsgemäßen Regelung weiter verbessert.

Beim Anlauf der Förderanlage ist vorgesehen, daß vor dem Anlaufen der Förderanlage zunächst ein geregelter Drehmomentaufbau stattfindet und dann der Hochlauf freigegeben wird. Dies bedeutet, daß, wenn das Drehmoment aufgebaut ist, der Hochlaufgeber zum erfindungsgemäßen Anlaufen des Förderbandes freigegeben wird und der Anlauf schwingungsfrei erfolgt. Dies ist insbesondere bei söhligen Bändern und aufwärts fördernden Bändern wichtig.

Zur Anwendung der erfindungsgemäßen Anfahr- und Bremsregelung ist eine Regelungseinrichtung gemäß Anspruch 8 vorgesehen. Durch diese Einrichtung ist eine, vorteilhaft mit üblichen Regelungsbausteinen, realisierbare Lösung der Aufgabe gegeben.

Weitere Einzelheiten der Erfindung ergeben sich aus der nachfolgenden Beschreibung eines Ausführungsbeispiels anhand der Zeichnung und in Verbindung mit den Unteransprüchen.

Es zeigt:

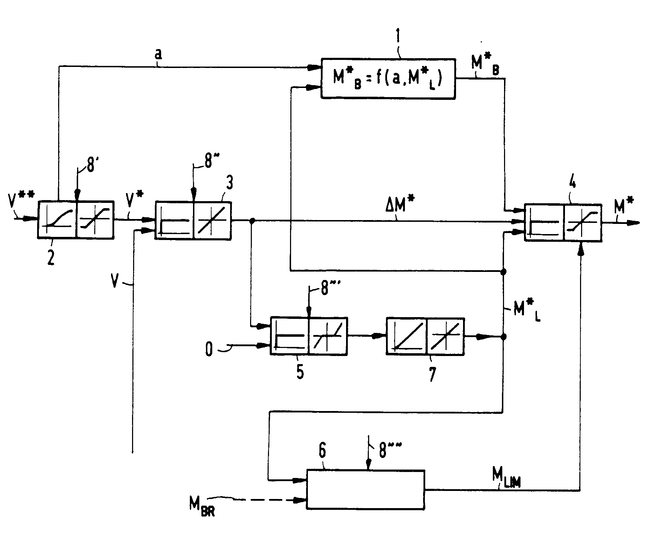

FIG 1 einen Übersichtsschaltplan der Regelung.

In FIG 1 sind die einzelnen Elemente der Regeleinrichtung durch Funktionssymbole o.ä. erläutert. Die Signalzusammenhänge sind durch Pfeile angedeutet, die mit üblichen Abkürzungen bezeichnet sind.

Das Beschleunigungsvorsteuerungselement, in dem das Signal M*_{B} gebildet wird (mit * gekennzeichnete Signale sind Sollwertsignale) ist mit 1 bezeichnet und der Hochlaufgeber, der die bekannte Ruckbegrenzung enthält, mit 2. Die Beschleunigung a aus dem Hochlaufgeber 2 wirkt auf die Beschleunigungsvorsteuerung 1. Der Geschwindigkeitsregler 3, dem das Geschwindigkeitssignal V und der Geschwindigkeits-Sollwert V* aufgegeben wird, wirkt seinerseits, ebenso wie die Beschleunigungsvorsteuerung 1, auf einen Addierverstärker 4, desgleichen der Nachführregler 5, dem ein Sollwertspeicher zur Lastvorsteuerung 7 nachgeschaltet ist.

Aus dem Sollwertspeicher zur Lastvorsteuerung 7 geht ebenfalls ein Signal an die Drehmomentbegrenzung 6 und von dort auf den Addierverstärker 4, von dem der Antriebsmotor oder bei einem Mehrmotorenantrieb die jeweiligen Motoren der Anlage gesteuert werden. Der Drehmomentbegrenzung 6 wird auch ein Signal des Bremsmoments aufgegeben.

Vor dem Anlaufen des Förderbandes wird zunächst das vor dem letzten Stillsetzen abgespeicherte Lastmoment M*_{L} in den Antriebsmotoren aufgebaut (Lastvorsteuerung). Bei abwärts fördernden Bändern und bei aufwärts fördernden Bändern ohne Rücklaufsperre wird dabei das Motormoment (motorisches oder generatorisches Moment) so aufgebaut, daß die Summe aus zunehmendem Motormoment und abnehmendem Bremsmoment M_{BR} dem Lastmoment entspricht. Da das im Sollwertspeicher anstehende Lastmoment M*_{L} ständig auf den Eingang des Addierverstärkers der Drehmomentbildung wirkt, wird das Signal M_{LIM} am Begrenzungseingang dieses Verstärkers in der ersten Phase entsprechend der gewünschten Funktion gesteuert.

Zur Überwindung des Reibungsmomentes in den Getrieben und Trommeln ist ein Drehmomentsprung M*_{L(o)} zulässig. Der weitere Anstieg des Motormomentes M* folgt einer Rampe bis der abgespeicherte Wert M*_{L} erreicht ist. Diese Aufbauzeit des Motormomentes richtet sich ebenfalls nach der Periodendauer Tₑ der Eigenfrequenz und bleibt unabhängig vom jeweiligen Endwert gleich.

In der Aufbauphase des Gurtzuges können sich die Trommeln geringfügig bewegen. Der Hochlaufgeber wird erst freigegeben, wenn das Motormoment M* den abgespeicherten Wert des Lastmomentes M*_{L} erreicht hat.

Die weiteren wesentlichen Verknüpfungen der Regelung sind aus den Signalpfeilen zu ersehen.

Bei dem Übersichtsschaltplan in FIG 1 ist die Drehmomentschale nicht gezeigt, deren Ausführung variabel ist und die von jedem Fachmann der Drehmomentregelung ausgeführt werden kann. Sie ist insbesondere von der Antriebsmotorcharakteristik und den Lastverhältnissen abhängig.

Die Elemente des vorstehend geschilderten Übersichtsschaltplans können sowohl eine separate Regelungseinrichtung bilden, als auch z.B. mit der Drehmomentregelung sowie weiteren Einrichtungen, insbesondere Einrichtungen für die Freigabesignale 8′ bis 8′′′′ in einer Einheit zusammengefaßt sein. Dies ist von den speziellen Einsatzbedingungen abhängig und liegt im Rahmen der üblichen, projektbezogenen Abwandlungen.

## Patentansprüche

1. Schwingungsfreie Regelung eines Antriebssystems, insbesondere für den Anfahr- und Bremsvorgang von massenschwingungsbehafteten Förderanlagen, z.B. Großbandanlagen oder Seilförderanlagen, die eine Anfahr- und Bremsmomentregelung mit einer Hochlauf- und Bremsverlaufsvorgabe aufweist und mit einem ersten, von der Vorgabe abhängigen Beschleunigungsmomenten-Sollwert (M*_{B}), mit einem zweiten Lastmomenten-Sollwert (M*_{L}) und mit einem dritten, von einem Geschwindigkeitsregler (3) abgeleiteten Zusatz-Sollwert (ΔM*) arbeitet, wobei die drei Sollwerte zur Erzeugung eines Momentensollwertes (M*) addiert werden und wobei der Lastmomenten-Sollwert (M*_{L}) während des stationären Betriebes ständig so nachgeführt wird, daß der Zusatzsollwert nahezu Null ist.

2. Schwingungsfreie Regelung nach Anspruch 1, **dadurch gekennzeichnet,** daß die Periodendauer (Te) der kleinsten Eigenfrequenz der Anfahr- oder Bremsmassenschwingung als Führungsgröße für den Aufbau des Lastmomenten-Sollwerts (M*_{L}) und der Beschleunigungsmomente verwendet wird.

3. Schwingungsfreie Regelung nach Anspruch 1 oder 2, **dadurch gekennzeichnet,** daß der Lastmomenten-Sollwert (M*_{L}) dem Ausgangssignal der Geschwindigkeitsregelung so nachgeführt wird, daß das Ausgangssignal des Geschwindigkeitsreglers (3) nahezu auf Null abgeglichen ist.

4. Schwingungsfreie Regelung nach Anspruch 1, 2 oder 3, **dadurch gekennzeichnet,** daß vor dem Anlaufen zunächst ein geregelter Drehmomentaufbau stattfindet und dann der Hochlauf freigegeben wird.

5. Schwingungsfreie Regelung nach Anspruch 2, 3 oder 4, **dadurch gekennzeichnet,** daß die Periodendauer der kleinsten Eigenfrequenz der Anfahr- oder Bremsmassenschwingungen durch Betriebsmessungen ermittelt wird.

6. Schwingungsfreie Regelung nach Anspruch 2, 3 oder 4, **dadurch gekennzeichnet,** daß die Periodendauer der kleinsten Eigenfrequenz der Anfahr- oder Bremsmassenschwingungen über ein elastisch gekoppeltes Massen-Modell ermittelt wird.

7. Schwingungsfreie Regelung nach Anspruch 1, 2, 3, 4, 5 oder 6, **dadurch gekennzeichnet**, daß das Beschleunigungsmoment (M^{*}_{B}) aus einer, von der Vorgabe abhängigen Beschleunigung (a) und der Summe der bewegten Massen (M_{Σ}) gebildet wird, wobei die summe (M_{Σ}) als Funktion des abgespeicherten Lastmomenten-Sollwertes (M^{*}_{L}) gebildet wird.

8. Regelungseinrichtung zum schwingungsfreien Betrieb massenschwingungsbehafteter Förderanlagen mit einer Hochlauf- und Bremsverlaufvorgabe des Antriebssystems, **dadurch gekennzeichnet,** daß sie ein Beschleunigungssteuerungselement (1) zur Erzeugung eines von der Vorgabe abhängigen Beschleunigungsmomenten-Sollwertes (M*_{B}), einen Hochlaufgeber mit Ruckbegrenzung (2) mit einem ersten nachgeschalteten Geschwindigkeitsregler (3) zur Bildung eines Zusatz-Sollwertes (ΔM*), einen zweiten Geschwindigkeitsregler (7) in Reihe mit einem Nachführregler (5) zur Bildung eines Lastmomenten-Sollwerts (M*_{L}) des Antriebssystems aufweist, wobei die drei Sollwerte einem Addierverstärker (4) zur Bildung eines Momentensollwertes (M*) zugeführt werden.

9. Einrichtung nach Anspruch 8, **dadurch gekennzeichnet,** daß sie einen Drehmomentbegrenzer (6) sowie eine Freigabeschaltung (8) aufweist.

10. Einrichtung nach Anspruch 9, **dadurch gekennzeichnet,** daß der Drehmomentbegrenzer (6) mit einem Bremsmomentengeber verbunden ist.

## Claims

1. Vibration-free control of a drive system, in particular for the starting and braking operation of conveying systems affected by mass vibration, for example large-capacity belt conveying systems or rope haulage systems, which has a starting and braking moment control with a running-up and braking characteristic requirement and operates with a first accelerating-moment setpoint (M*_{B}) dependent on the requirement, with a second load-moment setpoint (M*_{L}) and with a third additional setpoint (ΔM*), derived from a speed governor (3), the three setpoints being added to generate a moment setpoint (M*), and the load-moment setpoint (M*_{L}) being constantly corrected during stationary operation in such a way that the additional setpoint is virtually zero.

2. Vibration-free control according to Claim 1, characterized in that the period (Te) of the smallest natural frequency of the starting or braking mass vibration is used as a reference variable for the build-up of the load-moment setpoint (M*_{L}) and the accelerating moments.

3. Vibration-free control according to Claim 1 or 2, characterized in that the load-moment setpoint (M*_{L}) is corrected to the output signal of the speed control in such a way that the output signal of the speed governor (3) is adjusted virtually to zero.

4. Vibration-free control according to Claim 1, 2 or 3, characterized in that, before the starting, first of all a controlled torque build-up takes place and then the running-up is enabled.

5. Vibration-free control according to Claim 2, 3 or 4, characterized in that the period of the smallest natural frequency of the starting or braking mass vibrations is determined by operational measurements.

6. Vibration-free control according to Claim 2, 3 or 4, characterized in that the period of the smallest natural frequency of the starting or braking mass vibrations is determined by means of a flexibly coupled mass model.

7. Vibration-free control according to Claim 1, 2, 3, 4, 5 or 6, characterized in that the accelerating moment (M*_{B}) is formed from an acceleration (a) dependent on the requirement and the sum of the moving masses (M_{Σ}), the sum (M_{Σ}) being formed as a function of the stored load-moment setpoint (M*_{L}).

8. Control device for the vibration-free operation of conveying systems affected by mass vibration with a running-up and braking characteristic requirement of the drive system, characterized in that it has an acceleration control element (1) for generating an accelerating-moment setpoint (M*_{B}), dependent on the requirement, a running-up ramp-function generator with rate-of-change limiting (2) with a first downstream speed governor (3) for forming an additional setpoint (ΔM*), a second speed governor (7) in series with a compensating controller (5) for forming a load-moment setpoint (M*_{L}) of the drive system, the three setpoints being fed to a summing amplifier (4) for forming a moment setpoint (M*).

9. Device according to Claim 8, characterized in that it has a torque limiter (6) as well as an enabling circuit (8).

10. Device according to Claim 9, characterized in that the torque limiter (6) is connected to a braking moment generator.

## Revendications

1. Régulation sans vibration d'un système d'entraînement, notamment pour le démarrage et le freinage d'installations de transport sujettes à des vibrations de masse, par exemple d'installations à bande transporteuse de grande dimension ou d'installations de transporteurs à câble, et dans laquelle il est prévu une régulation du démarrage et une régulation du couple de freinage avec une prédétermination de la marche à régime élevé et du freinage, et qui travaille avec une première valeur de consigne du moment d'accélération (M*_{B}), qui dépend de la prédétermination, une seconde valeur de consigne du moment de charge (M*_{L}) et une troisième valeur de consigne supplémentaire (ΔM*), qui est dérivée d'un régulateur de vitesse (3), et dans laquelle les trois valeurs de consigne sont additionnées pour l'obtention d'une valeur de consigne (M*) du couple et la valeur de consigne (M*_{L}) du moment de charge est asservie en permanence pendant le fonctionnement stationnaire de sorte que la valeur de consigne supplémentaire soit presque nulle.

2. Régulation sans vibration suivant la revendication 1, caractérisée par le fait que la période (Te) correspondant à la fréquence propre la plus faible de la vibration de masse au démarrage ou lors du freinage est utilisée en tant que grandeur pilote pour la formation de la valeur de consigne (M*_{L}) du moment de charge et des moments d'accélération.

3. Régulation sans vibration suivant la revendication 1 ou 2, caractérisée par le fait que la valeur de consigne (M*_{L}) du moment de charge est asservie au signal de sortie de la régulation de vitesse de sorte que le signal de sortie du régulateur de vitesse (3) est presque compensé à zéro.

4. Régulation sans vibration suivant la revendication 1, 2 ou 3, caractérisé par le fait qu'un couple de rotation réglé tout d'abord est formé avant le démarrage et qu'ensuite la marche à régime élevée est libérée.

5. Régulation sans vibration suivant la revendication 2, 3 ou 4, caractérisée par le fait que la durée de la période correspondant à la fréquence propre la plus faible des vibrations lors du démarrage ou du freinage est déterminée au moyen de mesures de fonctionnement.

6. Régulation sans vibration suivant la revendication 2, 3 ou 4, caractérisé par le fait que la période correspondant à la fréquence propre la plus faible des vibrations lors du démarrage ou du freinage est déterminée par l'intermédiaire d'un modèle de masse couplé élastiquement.

7. Régulation sans vibration suivant la revendication 1, 2, 3, 4, 5 ou 6, caractérisée par le fait que le moment d'accélération (M*_{B}) est formé à partir d'une accélération (a) qui dépend de la prédétermination, et à partir de la somme des masses déplacées (M_{Σ}), la somme (M_{Σ}) étant formée en fonction de la valeur de consigne mémorisée (M*_{L}) du moment de charge.

8. Dispositif de régulation pour le fonctionnement sans vibration d'installations de transporteurs sujettes à des vibrations, comportant une prédétermination de la marche à régime élevé et du freinage du système d'entraînement, caractérisé par le fait qu'il comporte un élément (1) de commande de l'accélération servant à produire une valeur de consigne (M*_{B}) du moment d'accélération, qui dépend de la prédétermination, un générateur de marche à régime élevé pourvu d'un limiteur d'à-coups (2) et comportant un premier régulateur de vitesse (3) monté en aval pour la formation d'une valeur de consigne supplémentaire (ΔM*), un second régulateur de vitesse (7) monté en série avec un régulateur d'asservissement (5) pour la formation d'une valeur de consigne (M*_{L}) du moment de charge du système d'entraînement, les trois valeurs de consigne étant envoyées à un amplificateur supplémentaire (4) pour former une valeur de consigne (M*) du couple.

9. Dispositif suivant la revendication 8, caractérisé par le fait qu'il possède un limiteur de couple (6) ainsi qu'un circuit de libération (8).

10. Dispositif suivant la revendication 9, caractérisé par le fait que le limiteur de couple (6) est raccordé à un générateur de couple de freinage.
